# EUROPEAN PATENT SPECIFICATION

(11) **EP 1 096 595 B1**
(45) Date of publication and mention of the grant of the patent: **14.11.2007**
(21) Application number: 00308489.4
(22) Date of filing: 27.09.2000
(51) Int. Cl.: H01P 1/213

(54) **Antenna duplexer**
Antennenweiche
Duplexeur d'antenne

(30) Priority: 12.10.1999 JP 28966199
(43) Date of publication of application: 02.05.2001
(73) Proprietor: ALPS ELECTRIC CO., LTD., Ota-ku Tokyo 145 (JP)
(72) Inventor: Kanno, Sasumu, c/o Alps Electric Co., Ltd, Tokyo 145 (JP)
(74) Representative: Kensett, John Hinton

(56) References cited:
- EP-A- 0 361 801
- EP-A- 0 477 951
- PATENT ABSTRACTS OF JAPAN vol. 010, no. 011 (E-374), 17 January 1986 (1986-01-17) & JP 60 174534 A (TOUYOU TSUUSHINKI KK), 7 September 1985 (1985-09-07)
- PATENT ABSTRACTS OF JAPAN vol. 1998, no. 09, 31 July 1998 (1998-07-31) & JP 10 107534 A (MITSUBISHI MATERIALS CORP), 24 April 1998 (1998-04-24)
- PATENT ABSTRACTS OF JAPAN vol. 1998, no. 13, 30 November 1998 (1998-11-30) -& JP 10 209733 A (MURATA MFG CO LTD), 7 August 1998 (1998-08-07)

## Description

### BACKGROUND OF THE INVENTION

The present invention relates to an antenna duplexer for transmitting data.

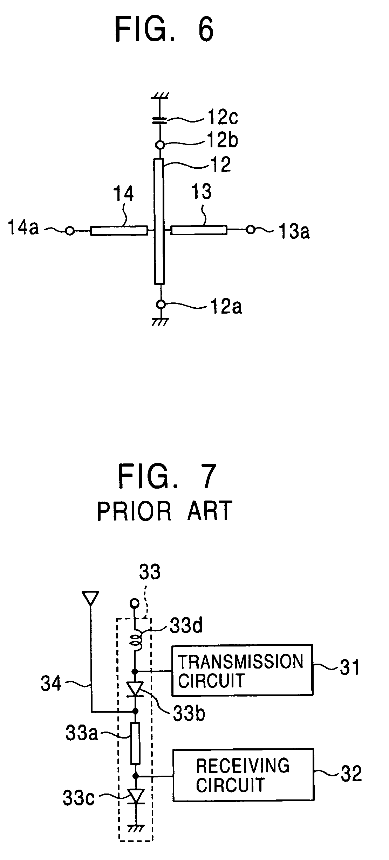

Fig. 7 shows the construction of a conventional antenna duplexer, in which a transmission circuit 31 and a receiving circuit 32 are connected to an antenna 34 via an antenna switching circuit 33. The antenna switching circuit 33 is formed, together with the transmission circuit 31 and the receiving circuit 32, on a printed-circuit board (not shown).

The antenna switching circuit 33 basically has a transmission line 33a having a length of a quarter of the wavelength of the transmission and receiving frequency, and two switching diodes 33b and 33c. The transmission line 33a is formed by a conductor attached to the printed-circuit board. One end of the transmission line 33a and the cathode of the first switching diode 33b are connected to each other, and the connection point thereof is connected to the antenna 34. Also, the anode of the second switching diode 33c is connected to the other end of the transmission line 33a, and the cathode thereof is grounded. The output end of the transmission circuit 31 is connected to the anode of the first switching diode 33b, and the input end of the receiving circuit 32 is connected the other end of the transmission line 33a.

Then, during transmission, a transmission or receiving switching voltage is applied to the anode of the first switching diode 33b via a choke inductor 33d. Thereupon, the first switching diode 33b and the second switching diode 33c conduct. In this state, a transmission signal output from the transmission circuit 31 passes through the first switching diode 33b and is output to the antenna 34. At this time, since the second switching diode 33c also conducts, the transmission signal input to the transmission line 33a side is totally reflected by the second switching diode 33c and is not input to the receiving circuit 32.

On the other hand, during reception, a switching voltage is not applied to the anode of the first switching diode 33b. Then, the first switching diode 33b and the second switching diode 33c do not conduct. Therefore, the signal received by the antenna 34 is input to the receiving circuit 32 after passing through the transmission line 33a without being input to the transmission circuit 31.

In a conventional antenna duplexer, the antenna switching circuit 33 uses two switching diodes and requires a choke inductor for applying a switching voltage. For this reason, a space for arranging these components must be provided on a printed-circuit board, the printed-circuit board becomes enlarged, and the size of the antenna duplexer cannot be reduced.

Also, since the number of parts used is large, this accordingly results in high cost.

A prior art duplexer is known from EP 0 361 801, which discloses an antenna, a transmission circuit, a receiving circuit, a first transmission line for connecting the transmission circuit to the antenna and a second transmission line for connecting the receiving circuit to the antenna.

Prior art document EP 0 477 951 A2 discloses a duplexer according to the preamble of claim 1.

Accordingly, an object of an antenna duplexer of the present invention is to reduce cost by decreasing the number of parts for antenna switching and to reduce the size by reducing the space of a printed-circuit board on which a receiving circuit and a transmission circuit are formed.

To achieve the above-mentioned object, according to the present invention, there is provided an antenna duplexer comprising: an antenna; a transmission circuit; a receiving circuit; a first transmission line connecting said transmission circuit to said antenna; and a second transmission line connecting said receiving circuit to said antenna, wherein a dielectric block (11) in the form of a rectangular parallelepiped is provided,
a first strip conductor (12), and second and third strip conductors (13, 14) are formed on the surface of said dielectric block, said first strip conductor being used as said antenna, said second strip conductor being used as said first transmission line, and said third strip conductor being used as said second transmission line,
said second conductor strip is set to a length of approximately a quarter of the wavelength of the transmission frequency,
said third conductor strip is set to a length of approximately a quarter of the wavelength of the receiving frequency,
characterised in that said first, second and third strip conductors are each provided around four sides of the dielectric block, said first strip conductor is set to a length of approximately a half of the wavelength of the transmission and receiving frequency, one end of each of said second strip conductor and said third strip conductor is connected to nearly the central position along the length of said first strip conductor, the other end of said second strip conductor is connected to said transmission circuit, and the other end of said third strip conductor is connected to said receiving circuit.

Preferably, a first terminal connected to an end portion of the first strip conductor, a second terminal connected to an end portion of the second strip conductor, and a third terminal connected to an end portion of the third strip conductor are formed on the surface of the dielectric block, a printed-circuit board, on which the transmission circuit and the receiving circuit are formed, is provided, the dielectric block is mounted on the printed-circuit board, the first terminal is connected to a grounding conductor provided on the printed-circuit board, the second terminal is connected to the transmission circuit, and the third terminal is connected to the receiving circuit.

The above and further objects, aspects and novel features of the invention will become more fully apparent from the following detailed description when read in conjunction with the accompanying drawings.
Fig. 1 is a block diagram showing the construction of an antenna duplexer of the present invention.
Fig. 2 is a block diagram showing another construction of the antenna duplexer of the present invention.
Fig. 3 is a block diagram showing still another construction of the antenna duplexer of the present invention.
Fig. 4 is a perspective view showing the construction of an antenna block used in the antenna duplexer of the present invention.
Fig. 5 is a perspective view showing an assembled antenna duplexer of the present invention.
Fig. 6 is an equivalent circuit diagram of the antenna block used in the antenna duplexer of the present invention.
Fig. 7 is a block diagram showing the construction of a conventional antenna duplexer.

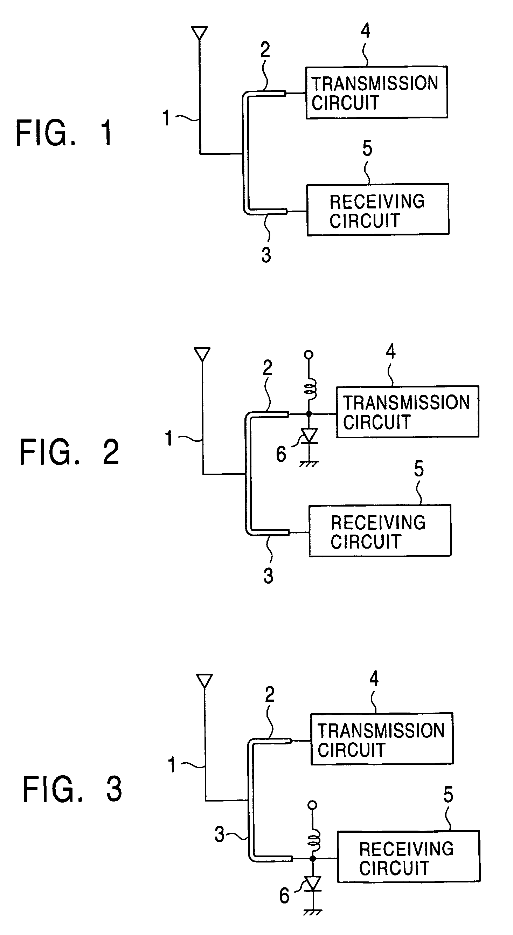

Fig. 1 shows a block circuit diagram of an antenna duplexer of the present invention. In Fig. 1, a first transmission line 2 and a second transmission line 3 are connected to an antenna 1, a transmission circuit 4 is connected to the antenna 1 in series with the first transmission line 2, and a receiving circuit 5 is connected to the antenna in series with the second transmission line 3.

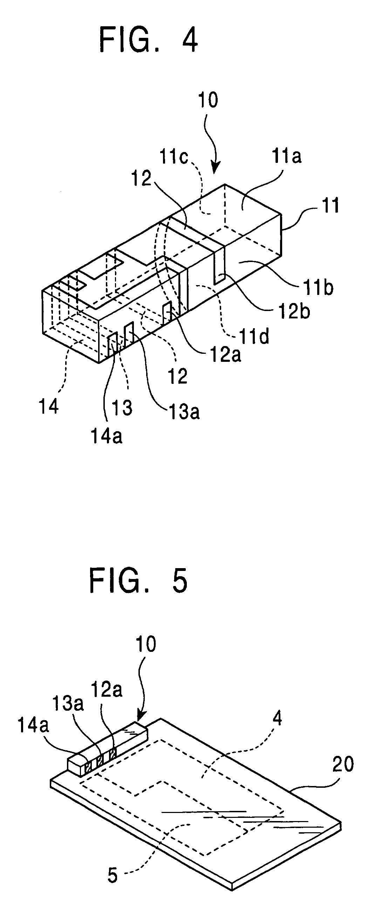

The transmission circuit 4 and the receiving circuit 5 are formed on a printed-circuit board (see reference numeral 20 in Fig. 5). The first transmission line 2 and the second transmission line 3 are formed by, for example, conductors attached to the printed-circuit board. The length of the first transmission line 2 is set to be approximately a quarter of the wavelength of the transmission frequency, and the length of the second transmission line 3 is set to be approximately a quarter of the wavelength of the receiving frequency. Therefore, if the transmission frequency and the receiving frequency are the same, the lengths of the first transmission line 2 and the second transmission line 3 are equal.

The antenna 1 is usually formed by a line of a length of a half wavelength or a quarter wavelength, and impedance differs according to the length thereof. For example, in the case of a half wavelength, the impedance is about 73 ohms, and in the case of a quarter wavelength, the impedance is about 36 ohms. Also, generally, the input or output impedance of a circuit system (the transmission circuit 4, the receiving circuit 5, etc.) is designed to 50 ohms. Therefore, since Zin = (Z₀ × R)^{1/2}, by appropriately setting the characteristic impedances of the first transmission line 4 and the second transmission line 5, it is possible to match the impedance of the antenna 1 with the output impedance of the transmission circuit 4. Similarly, it is possible to match the impedance of the antenna 1 with the input impedance of the receiving circuit 5. In the above-described equation, Zin is the impedance when viewed in a direction from the connection point of the antenna 1 and the transmission lines 2 and 3 to the transmission circuit 4 or the receiving circuit 5 side, Z₀ is the characteristic impedance of the transmission lines 2 and 3, and R is the output impedance of the transmission circuit 4 or the input impedance of the receiving circuit 5.

During reception, a received signal received by the antenna 1 is input to the receiving circuit 5 via the second transmission line 3. The received signal is also split to the first transmission line 2, and the signal is input to the output end of the transmission circuit 4. As a result, at the input end of the receiving circuit 5, the received signal is decreased slightly (approximately 3 dB), but this presents no problem in practice. Also, in the transmission circuit 4, since the received signal is input to the output end thereof, there is no particular problem, and during reception, since the supply of a power voltage to the transmission circuit 4 is in a stopped state, no problem is posed at all.

In a case where a decrease in level of the received signal input to the receiving circuit 5 becomes a problem, as shown in Fig. 2, if the connection point of the first transmission line 2 and the transmission circuit 4 is connected to a ground by a first switching diode 6, and if this first switching diode 6 is turned on during reception and is turned off during transmission, the received signal input to the transmission circuit 4 is totally reflected, thereby making it possible to prevent a decrease in level at the input end of the receiving circuit 5.

On the other hand, during transmission, a transmission signal output from the transmission circuit 4 is input to the antenna 1 via the first transmission line 2. At this time, part of the transmission signal is split to the second transmission line 3 side, and the signal is input to the receiving circuit 5. During transmission, since the supply of a power voltage to be supplied to the receiving circuit 5 is stopped, no problem occurs in the receiving circuit 5. Also, since the signal is split to the second transmission line 3, transmission power emitted from the antenna 1 is decreased slightly (approximately 3 dB), but this hardly presents a problem, and this output decrease can be dealt with by increasing the output power of the transmission circuit 4. Alternatively, as shown in Fig. 3, if a second switching diode 7 is connected between the connection point of the second transmission line 3 and the receiving circuit 5 and a ground, and if this first switching diode 6 is turned on during transmission and is turned off during reception, the transmission signal is totally reflected at the input end of the receiving circuit 5, thereby making it possible to prevent the output power from being decreased.

Fig. 4 is a perspective view of an antenna block 10 which is formed in such a way that the antenna 1, the first transmission line 2, and the second transmission line 3 which are used in the antenna duplexer of the present invention are formed on a dielectric block so as to be formed as one block part.

In Fig. 4, a dielectric block 11 in the form of a rectangular parallelepiped or a flat plate is formed of ceramic having a small dielectric loss. By printing a silver paste on a top surface 11a of the dielectric block 11, opposing sides 11b and 11c, and a bottom surface 11d, a first conductor in the form of a strip (first strip conductor) 12, a second conductor in the form of a strip (second strip conductor) 13, and a third conductor in the form of a strip (third strip conductor) 14 are formed. The length of the first strip conductor 12 is set to be a length of approximately half the wavelength of the transmission and receiving frequency, forming the antenna 1.

Also, the second strip conductor 13 and the third strip conductor 14 are formed in such a manner as to branch from nearly the center along the length of the first strip conductor 12, the lengths thereof are set to be a length of approximately a quarter of the wavelength of the transmission and reception frequency, the second strip conductor 13 forms the first transmission line 2, and the third strip conductor 14 forms the second transmission line 3.

A first terminal 12a connected to one of the end portions of the first strip conductor 12, a second terminal 13a connected to the end portion of the second strip conductor 13, and a third terminal 14a connected to the end portion of the third strip conductor 14 are formed on the side 11b.

The antenna block 10 constructed as described above, as shown in Fig. 5, is placed on a printed-circuit board 20 on which the transmission circuit 4 and the receiving circuit 5 are formed.

Then, by connecting the transmission circuit 4 to the second terminal 13a, it is connected to the first transmission line 2, and by connecting the receiving circuit 5 to the third terminal 14a, it is connected to the second transmission line 3.

Also, the first terminal 12a is connected to a grounding conductor (not shown) formed on the printed-circuit board 10. Therefore, other than the transmission circuit 4 and the receiving circuit 5, only the antenna block 10 needs to be mounted on the printed-circuit board 20.

Also, since the antenna 1, the first transmission line 2, and the second transmission line 3 are provided on the surface of the dielectric block 11, a necessary length can be obtained even if the dielectric block 11 is small, the size can be reduced, and assembly operations are simplified.

If a fourth terminal 12b connected to the other end portion of the first strip conductor 12 is provided on the side 11d of the dielectric block 11, and if the fourth terminal 12b is connected to a grounding terminal by a terminating capacitor 12c (see Fig. 6), the length of the first strip conductor 12 can be shortened.

As has thus been described, the antenna duplexer of the present invention comprises an antenna, a transmission circuit, a receiving circuit, a first transmission line for connecting the transmission circuit to the antenna, and a second transmission line for connecting the receiving circuit to the antenna, the length of the first transmission line is approximately a quarter of the wavelength of the transmission frequency, and the length of the second transmission line is set to be approximately a quarter of the wavelength of the receiving frequency. Therefore, even if an antenna switching circuit is not provided between the antenna and the transmission circuit or the receiving circuit, transmission and reception become possible, and costs can be reduced by decreasing the number of parts. Also, by appropriately setting the characteristic impedances of the first transmission line and the second transmission line, it is possible to match the impedance between the antenna and the transmission circuit with the impedance between the antenna and the receiving circuit.

Also, in the antenna duplexer of the present invention, a first switching diode for shunting the connection point of the first transmission line and the transmission circuit to a ground is provided, and the first switching diode is turned off during transmission and is turned on during reception, thereby making it possible to prevent the level of a received signal input to the receiving circuit from being decreased.

Also, in the antenna duplexer of the present invention, a second switching diode for shunting the connection point of the second transmission line and the receiving circuit to a ground is provided, and the second switching diode is turned off during reception and is turned on during transmission, thereby making it possible to prevent the level of a transmission signal sent from the antenna from being decreased.

Also, in the antenna duplexer of the present invention, a dielectric block in the form of a rectangular parallelepiped is provided, a first strip conductor, and second and third strip conductors which branch from nearly the center along the length of the first strip conductor are formed on the surface of the dielectric block, the first strip conductor is used as an antenna, the second strip conductor is used as a first transmission line, and the third conductor is used as a second transmission line. Therefore, the antenna, the first transmission line, and the second transmission line can be formed compact as an antenna block, and it is easy to reduce the size thereof, and the cost can be reduced.

Also, in the antenna duplexer of the present invention, a first terminal connected to the end portion of the first strip conductor, a second terminal connected to the end portion of the second strip conductor, and a third terminal connected to the end portion of the third strip conductor are formed on the surface of a dielectric block, a printed-circuit board, on which a transmission circuit and a transmission circuit are formed, is provided, the dielectric block is mounted on the printed-circuit board, the first terminal is connected to a grounding conductor provided on the printed circuit board, the second terminal is connected to the transmission circuit, and the third terminal is connected to the receiving circuit. Therefore, assembly operations are simplified, and the size of the antenna duplexer can be reduced.

## Claims

1. An antenna duplexer comprising:
an antenna (1);
a transmission circuit (4);
a receiving circuit (5);
a first transmission line (2) connecting said transmission circuit to said antenna; and
a second transmission line (3) connecting said receiving circuit to said antenna,
wherein a dielectric block (11) in the form of a rectangular parallelepiped is provided,
a first strip conductor (12), and second and third strip conductors (13, 14) are formed on the surface of said dielectric block, said first strip conductor being used as said antenna, said second strip conductor being used as said first transmission line, and said third strip conductor being used as said second transmission line,
said second conductor strip being set to a length of approximately a quarter of the wavelength of the transmission frequency,
said third conductor strip being set to a length of approximately a quarter of the wavelength of the receiving frequency,
**characterised in that** said first, second and third strip conductors are each provided around four sides of the dielectric block, said first strip conductor is set to a length of approximately a half of the wavelength of the transmission and receiving frequency, one end of each of said second strip conductor and said third strip conductor is connected to nearly the central position along the length of said first strip conductor, the other end of said second strip conductor is connected to said transmission circuit, and the other end of said third strip conductor is connected to said receiving circuit.

2. An antenna duplexer according to Claim 1, wherein a first terminal (12a) connected to an end portion of said first strip conductor, a second terminal (13a) connected to an end portion of said second strip conductor, and a third terminal (14a) connected to an end portion of said third strip conductor are formed on the surface of said dielectric block, a printed-circuit board (20), on which said transmission circuit and said receiving circuit are formed, is provided, said dielectric block is mounted on said printed-circuit board, said first terminal is connected to a grounding conductor provided on said printed-circuit board, said second terminal is connected to said transmission circuit, and said third terminal is connected to said receiving circuit.

## Patentansprüche

1. Antennenduplexer, aufweisend:
eine Antenne (1);
eine Übertragungsschaltung (4);
eine Empfangsschaltung (5);
eine erste Übertragungsleitung (2), die die Übertragungsschaltung mit der Antenne verbindet; und
eine zweite Übertragungsleitung (3), die die Empfangsschaltung mit der Antenne verbindet,
wobei ein dielektrischer Block (11) in der Form eines rechteckigen Parallelepipeds vorhanden ist,
eine erste Leiterbahn (12) und eine zweite und eine dritte Leiterbahn (13, 14) auf der Oberfläche des dielektrischen Blocks ausgebildet sind, wobei die erste Leiterbahn als die genannte Antenne verwendet wird, die zweite Leiterbahn als die erste Übertragungsleitung verwendet wird und die dritte Leiterbahn als die zweite Übertragungsleitung verwendet wird,
wobei die zweite Leiterbahn auf eine Länge von ungefähr einem Viertel der Wellenlänge der Übertragungsfrequenz festgelegt ist,
wobei die dritte Leiterbahn auf eine Länge von ungefähr einem Viertel der Wellenlänge der Empfangsfrequenz festgelegt ist,
**dadurch gekennzeichnet, dass** die erste, zweite und dritte Leiterbahn jeweils um vier Seiten des dielektrischen Blocks herum erstellt sind, dass die erste Leiterbahn auf eine Länge von ungefähr einer Hälfte der Wellenlänge der Übertragungs- und Empfangsfrequenz festgelegt ist, dass jeweils ein Ende der zweiten Leiterbahn und der dritten Leiterbahn mit ungefähr der zentralen Position entlang der Länge der ersten Leiterbahn verbunden ist, dass das andere Ende der zweiten Leiterbahn mit der Übertragungsschaltung verbunden ist, und dass das andere Ende der dritten Leiterbahn mit der Empfangsschaltung verbunden ist.

2. Antennenduplexer nach Anspruch 1, wobei ein erster Anschluss (12a), der mit einem Endbereich der ersten Leiterbahn verbunden ist, ein zweiter Anschluss (13a), der mit einem Endbereich der zweiten Leiterbahn verbunden ist, und ein dritter Anschluss (14a), der mit einem Endbereich der dritten Leiterbahn verbunden ist, auf der Oberfläche des dielektrischen Blocks ausgebildet sind, eine gedruckte Leiterplatte (20), auf der die Übertragungsschaltung und die Empfangsschaltung ausgebildet sind, vorhanden ist, der dielektrische Block auf der gedruckten Leiterplatte angebracht ist, der erste Anschluss mit einem auf der gedruckten Leiterplatte vorhandenen erdenden Leiter verbunden ist, der zweite Anschluss mit der Übertragungsschaltung verbunden ist und der dritte Anschluss mit der Empfangsschaltung verbunden ist.

## Revendications

1. Duplexeur d'antenne, comprenant :
une antenne (1) ;
un circuit d'émission (4) ;
un circuit de réception (5) ;
une première ligne d'émission (2) connectant ledit circuit d'émission à ladite antenne ; et
une deuxième ligne d'émission (3) connectant ledit circuit de réception à ladite antenne,
dans lequel un bloc diélectrique (11) est prévu, sous la forme d'un parallélépipède rectangle,
un premier conducteur en ruban (12), et un deuxième et un troisième conducteurs en ruban (13, 14) sont formés sur la surface dudit bloc diélectrique, ledit premier conducteur en ruban étant utilisé en tant que ladite antenne, ledit deuxième conducteur en ruban étant utilisé en tant que ladite première ligne d'émission, et ledit troisième conducteur en ruban étant utilisé en tant que ladite deuxième ligne d'émission,
ledit deuxième conducteur en ruban étant défini avec une longueur d'environ un quart de la longueur d'onde de la fréquence de réception,
**caractérisé en ce que** lesdits premier, deuxième et troisième conducteurs en ruban sont, chacun, agencés sur les quatre côtés du bloc diélectrique, ledit premier conducteur en ruban est défini avec une longueur d'environ une moitié de la longueur d'onde de la fréquence d'émission et de réception, une extrémité de chacun desdits deuxième conducteur en ruban et troisième conducteur en ruban est connectée pratiquement en position centrale sur la longueur dudit premier conducteur en ruban, l'autre extrémité dudit deuxième conducteur en ruban est connectée audit circuit d'émission, et l'autre extrémité dudit troisième conducteur en ruban est connectée au dit circuit de réception.

2. Duplexeur d'antenne selon la revendication 1, dans lequel une première borne (12a) connectée à une portion d'extrémité dudit premier conducteur en ruban, une deuxième borne (13a) connectée à une portion d'extrémité dudit deuxième conducteur en ruban, et une troisième borne (14a) connectée à une portion d'extrémité dudit troisième conducteur en ruban, sont formées sur la surface dudit bloc diélectrique, une carte de circuit imprimé (20), sur laquelle ledit circuit d'émission et ledit circuit de réception sont formés, est prévue, ledit bloc diélectrique étant monté sur ladite carte de circuit imprimé, et ladite première borne est connectée à un conducteur de mise à la terre prévu sur ladite carte de circuit imprimé, ladite deuxième borne est connectée audit circuit d'émission, et ladite troisième borne est connectée audit circuit de réception.
